# EUROPÄISCHE PATENTSCHRIFT

(11) **EP 0 949 437 B1**
(45) Veröffentlichungstag und Bekanntmachung des Hinweises auf die Patenterteilung: **29.10.2003**
(21) Anmeldenummer: 99107055.8
(22) Anmeldetag: 09.04.1999
(51) Int. Cl.: F16K 3/08

(54) **Dichtungselement sowie Ventiloberteil mit einem derartigen Dichtungselement**
Sealing element and valve insert using the same
Joint d'étanchéité et tête de robinet comportant un tel joint

(30) Priorität: 11.04.1998 DE 19816286
(43) Veröffentlichungstag der Anmeldung: 13.10.1999
(73) Patentinhaber: ANTON TRÄNKLE GMBH & CO. KG, 78098 Triberg (DE)
(72) Erfinder: Fleig, Jürgen, 78098 Tribert (DE); Meier, Jürgen, 78098 Triberg (DE)
(74) Vertreter: Patentanwälte Westphal, Mussgnug & Partner

(56) Entgegenhaltungen:
- EP-A- 0 063 627
- EP-A- 0 802 361
- DE-A- 3 031 371
- DE-A- 3 226 644
- US-A- 4 301 836
- US-A- 4 854 347
- US-A- 4 986 306

## Beschreibung

Die Erfindung betrifft ein Dichtungselement gemäß Oberbegriff von Anspruch 1; wie es beispielsweise aus EP-A-63 627 (Figur 9b) bekannt ist sowie ein Ventiloberteil gemäß Oberbegriff von Anspruch 2, wie es z.B. in der DE-OS 37 14 450 beschrieben ist.

Dichtungselemente bzw. damit versehene Ventiloberteile können im Betrieb starke, als unangenehm empfundene Geräusche verursachen.

Lärmbelästigungen durch Betätigen von WC-Spülungen, Duschen, Badewannen oder Waschbecken sind allseits bekannt. Diese Geräuschentwicklung kann zwar nicht vollständig eliminiert werden, ist jedoch deutlich reduzierbar.

Die Geräusche bilden sich in den Armaturen und werden dann auf das Rohrleitungsnetz übertragen und über mehrere Etagen hinweg fortgeleitet. Negativ beeinflußt wird dieser durch die Rohrleitungen weitergeleitete Wasserschall über die mit den Wänden teilweise fest verbundenen Rohre, so daß dieser Schall in den Wohnräumen als störend empfunden werden kann.

Eine gewisse Geräuschminderung kann schon durch die gedämpfte Aufhängung des Rohrleitungsnetzes erreicht werden. Die Geräusche der Rohrleitungen selbst sind im Vergleich zur Armatur gering und können in der Regel vernachlässigt werden. Die Hauptursache für die Geräuschbildung liegt allerdings in der Armatur selbst, insbesondere in der Gestaltung des Ventilsitzes bzw. der Schließmechanismen der Ventile.

Die Geräuschbildung in der Armatur wird durch Querschnittsunterschiede, Richtungsänderungen des Wasserweges und Umspülungen scharfer Kanten und Ecken durch das Wasser verursacht.

Querschnittsverengungen führen zu erhöhten Strömungsgeschwindigkeiten des Wassers. Richtungsänderungen und das Auftreffen des Mediums auf scharfe Kanten und Ecken führen zu Verwirbelungen und Turbulenzen.

Dabei haben sich in erster Linie zwei Geräuschquellen ergeben. Zum einen sind es Turbulenzen und Verwirbelungen. Diese treten vornehmlich bei Richtungsänderungen und an scharfkantigen, eckigen Hindernissen in der Strömung auf. Das hat zur Folge, daß aufgrund der auftretenden Wirbel die als unangenehm empfundenen Schallgeräusche entstehen.

Auf diese Geräuschbildung haben die oben erwähnten Dichtungselemente bzw. Steuerscheiben sowie Ventiloberteile keinerlei Einfluß, da sie von der strömungstechnischen Konstruktion des Armaturenkörpers verursacht wird.

Die zweite Geräuschquelle sind Querschnittsverengungen, wodurch erhöhte Strömungsgeschwindigkeiten auftreten. Diese werden auch Kavitationsgeräusche genannt. Genauer betrachtet verbirgt sich dahinter folgendes.

Liegen in der Armatur sehr große Querschnittsverengungen und somit auch sehr hohe unterschiedliche Strömungsgeschwindigkeiten vor, so kann der Druck an der Engstelle sehr klein sein und erheblich unter dem atmosphärischen Luftdruck liegen. Bei diesen geringen Drücken neigt das Wasser bereits bei niedrigen Temperaturen zum Sieden, was zur Folge hat, daß kleine Dampfbläschen entstehen. Diese Dampfbläschen "zerplatzen" (kondensieren) nach dieser Engstelle, wenn sich der Druck wieder erhöht. Die bei diesem Prozeß entstandene Energie wird zum Teil in Schallenergie umgewandelt.

Die Auslegung bzw. Konstruktion bisher verwandter Dichtungselemente bzw. Steuerscheiben sowie damit bestückte Ventiloberteile läßt lediglich eine Steuerung der Durchflußmenge zu, ohne dabei wirksam auf das beim Öffnen, Durchfließen und Schließen entstehende Geräusch dämpfend einzuwirken. Um die erforderlichen Geräuschwerte gemäß DIN EN 200 zu erfüllen, wurde bisher ein weiteres zusätzliches Teil verwandt, das entweder aus Kunststoff oder aus Metall hergestellt und zusätzlich neben den verwendeten Dichtungsscheiben montiert wurde.

Die Aufnahme eines zusätzlichen Teiles ist nicht nur aufgrund der zusätzlichen Materialkosten und Montagezeit kostspielig, sondern kann auch dazu führen, daß das entsprechende Ventiloberteil ggf. mit größeren Abmessungen zu versehen ist.

Der Erfindung liegt daher die Aufgabe zugrunde, ein Dichtungselement der eingangs genannten Art anzugeben, das mit technisch einfachen Mitteln die beim Betätigen auftretende Geräuschentwicklung nahezu beseitigt.

Diese Aufgabe wird bei einem Dichtungselement der eingangs genannten Art erfindungsgemäß durch die kennzeichnenden Merkmale gemäß Anspruch 1 gelöst.

Dadurch ist es möglich, die Geräuschentwicklung durch Erhöhung des Strömungswiderstandes für das Medium deutlich zu minimieren, da die geräuschdämpfende Einrichtung direkt an dem Entstehungsort dieser Geräusche angeordnet ist.

Dies konnte bisher mit diesem zusätzlichen Dämpfungselement nicht erreicht werden, da dieses nicht exakt an den Geräuschentstehungsherd heranreichte.

Des weiteren ist es möglich, die integrierten, geräuschhemmenden Stege bezüglich des Durchmessers, der Länge und der Form den jeweiligen Anforderungen anzupassen. Diese Anpassung kann mit Hilfe des Dichtungselements so vorgenommen werden, daß durch eine spezielle Anordnung der Stege der Hersteller in der Lage ist, mit dem Dichtungselement bzw. dem Ventiloberteil ohne zusätzliche Montage eines weiteren Bauteils die geforderten Geräuschwerte nach DIN EN 200 zu erreichen.

Gemäß der Erfindung ist das Dichtungselement im wesentlichen eine kreisförmige Scheibe, in deren einem Kreissegment der Öffnungsbereich angeordnet ist, wobei der Öffnungsbereich in dem Kreissegment einen Öffnungswinkel zwischen 90° und 270°, vorzugsweise 90°, 180° oder 270°, aufweisen kann.

Gemäß der Erfindung sind die Stege senkrecht zu einem die Scheibe halbierenden Durchmesser sowie parallel zueinander verlaufend angeordnet.

Um dieses Dichtungselement verschwenken zu können, sind an dessem Außenrand diametral Aussparungen angeordnet, die bevorzugt im Bereich des halbierenden Duchmessers vorhanden sind.

Eine noch bessere Geräuschdämpfung ist erfindungsgemäß dadurch erzielt, daß die Stege frei von scharfen Kanten oder Ecken sind.

Die Verwendung von Keramik für dieses Dichtungselement hat einen großen Vorteil dahingehend, daß es eine nahezu unbeschränkte Lebensdauer aufweist, da Keramik ein nahezu verschleißfreies Material für derartige Dichtungselemente ist.

In vorteilhafter Weise kann das Dichtungselement in einem Ventiloberteil oder in einer Kartusche für Einhebelmischer einer Sanitärarmatur verwandt werden.

Der Erfindung liegt des weiteren die Aufgabe zugrunde; ein Ventiloberteil der eingangs genannten Art anzugeben, das mit technisch einfachen Mitteln die beim Betätigen auftretende Geräuschentwicklung nahezu beseitigt.

Diese Aufgabe wird bei einem Ventiloberteil der eingangs genannten Art erfindungsgemäß durch die kennzeichnenden Merkmale gemäß Anspruch 2 gelöst.

Ein derartiges Ventiloberteil weist die gleichen Vorteile und Merkmale auf, die bereits oben schon im Zusammenhang mit dem erfindungsgemäßen Dichtungselement angegeben worden sind, so daß auf die entsprechende Beschreibung der Vorteile verwiesen wird.

Um ein derartiges Ventiloberteil rasch in ein rechts öffnendes oder links öffnendes Ventil umwandeln zu können, sind in der Innenwandung des Aufnahmeraums zwei um 180° gegeneinander versetzte axiale Rillen vorgesehen und die Grundscheibe weist an zwei diametral gegenüberliegenden Stellen Ihres Umfangs Vorsprünge auf, die wahlweise derart in die axialen Rillen einsetzbar sind, daß der Öffnungsbereich der Grundscheibe an zwei unterschiedlichen Positionen angeordnet werden kann.

Trotz des wahlweisen Rechts- oder Linksschließens ist nur eine Drehung der Spindel innerhalb des Kopfstückes erforderlich. Bei bekannten Ventiloberteilen ist es aber möglich, daß die die beiden Anschlagstellen der Spindel im Kopfstück bestimmenden Anschläge bzw. Drehrichtungsbegrenzungsflächen vom Wasser umströmt werden können, so daß im Wasser mitgeführte Verschmutzungen, insbesondere Kalk und Sand, zwischen die eng tolerierten Teile geraten bzw. sich ablagern können, und die Schließeigenschaften beeinträchtigen. Dies ist insbesondere dann nachteilig, wenn die Schließbewegung des Ventiloberteils in beiden Richtungen erfolgen kann.

Es ist daher vorteilhaft, wenn die Spindel mit zwei diametral gegenüberliegenden Anschlägen im Kopfstück zur Erzeugung der beiden Anschlagstellungen zusammenwirkende Drehrichtungsbegrenzungsflächen aufweist und oberhalb sowie unterhalb der Drehrichtungsbegrenzungsflächen je einen an der Innenseite des Kopfstücks anliegenden Dichtungs- und Radialführungsring trägt, wobei die Dichtungs- und Radialführungsringe unterschiedliche Durchmesser aufweisen.

Dadurch können die entsprechenden Anschlagteile nicht mehr von Wasser umströmt werden. Zwischen den beiden Dichtungsund Radialführungsringen, die zum unbehinderten Einsetzen in das Kopfstück unterschiedlichen Durchmesser aufweisen können, wird so eine gegen das Wasser abgedichtete Fettkammer gebildet, die stets ein einwandfreies Schließen des Ventils in beiden Richtungen gewährleistet.

Eine weitere Verbesserung der Führung der Spindel im Kopfstück ist dann möglich, wenn die Spindel nahe den Dichtungsund Radialführungsringen je eine an der Innenseite des Kopfstücks anliegende Axiallagergleitscheibe trägt.

Gemäß einer weiteren vorteilhaften Ausführungsform ist es möglich, aus dem unteren Ende der Spindel zwei diametral angeordnete Mitnehmerrippen vorzusehen, die in jeder Anschlagstellung der Spindel mit ihren beiden radialen Enden zwischen je zwei Fenstern des Kopfstücks angeordnet sind und zum Verschwenken der Steuerscheibe in deren Aussparungen eingreifen. Dabei kann die Anordnung derart sein, daß die Spindel um 90° bis 270°, vorzugsweise um 90°, 180° oder 270° verdrehbar ist.

Weitere Merkmale und Vorteile der Erfindung ergeben sich aus der folgenden Beschreibung mehrerer Ausführungsformen sowie aus den Zeichnungen, auf die Bezug genommen wird.

Es zeigen:
- Fig. 1: eine Draufsicht auf ein Dichtungselement;
- Fig. 2: eine vergrößerte Detailansicht des in Fig.1 eingekreisten Bereiches;
- Fig. 3: eine Querschnittsansicht des Dichtungselementes entlang der Linie A-A von Fig.1;
- Fig. 4: eine Unteransicht des in Fig.1 dargestellten Dichtungselements;
- Fig. 5: eine teilweise geschnittene Seitenansicht eines Ventiloberteils;
- Fig. 6: eine Unteransicht des in Fig.5 gezeigten Ventiloberteils; und
- Fig. 7: eine Draufsicht des in Fig.5 gezeigten Ventiloberteils.

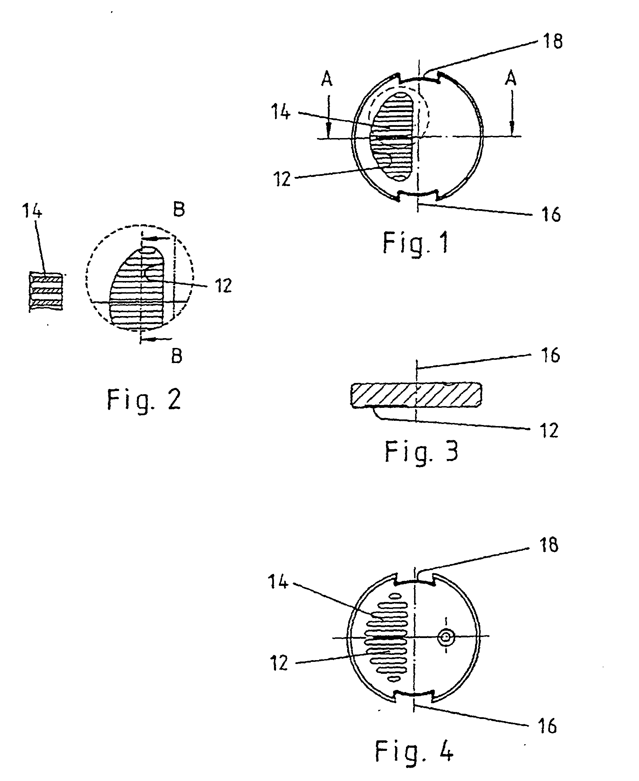

In der Fig.1 ist ein Dichtungselement 10 in Draufsicht dargestellt, das einen Öffnungsbereich 12 aufweist, der in diesem Falle halbkreissegmentförmig ausgebildet ist. Dieser Öffnungsbereich 12 kann aber auch andere Kreissegmentformen aufweisen, beispielsweise mit einem Öffnungswinkel von 90° bis 270°, vorzugsweise 90° oder 270°.

Dieser Öffnungsbereich 12 weist Stege 14 auf, die senkrecht zu einem das Dichtungselement 10 halbierenden Durchmesser 16 sowie parallel zueinander angeordnet sind. An den Außenrandbereichen des Dichtungselementes 10 sind an den beiden Enden des Durchmessers 16 Aussparungen 18 angeordnet, in die ein rotierbares Element einer Armatur zum Verschwenken dieses Dichtungselementes 10 eingreifen kann.

In der Detailansicht gemäß Fig.2 ist die Anordnung der Stege 14 deutlicher veranschaulicht. Aus dem zur Fig.2 gehörenden Querschnitt entlang der Linie B-B ist entnehmbar, daß auf einer Seite des Dichtungselementes 10 die Ebene der Stege 14 unterhalb der Ebene des Dichtungselementes 10 liegt.

Dies geht auch aus der Fig.3 hervor, die eine Schnittansicht des in Fig.1 gezeigten Dichtungselementes 10 entlang der dort gezeigten Linie A-A wiedergibt.

Die Fig.4 zeigt eine Unteransicht des in Fig.1 dargestellten Dichtungselementes 10 und verdeutlicht dabei, daß die Stege 14 auf dieser Seite des Dichtungselementes 10 mit der übrigen Oberfläche des Dichtungselementes 10 fluchten.

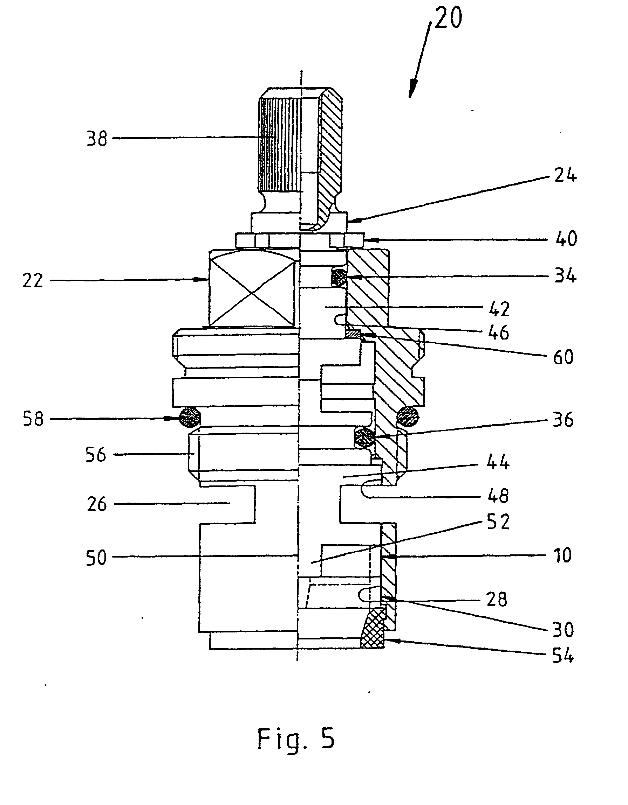

Dieses in den Fig.1 bis 4 gezeigte Dichtungselement 10 kann in vorteilhafter Weise in einem Ventiloberteil 20 (siehe Fig.5) oder in einer Kartusche für Einhebelmischer einer Sanitärarmatur verwandt werden.

Das Dichtungselement 10 besteht aus Keramik, da es dadurch eine nahezu unbegrenzte Lebensdauer hat.

In den Fig.5 bis 7 ist in verschiedenen Ansichten ein Ventiloberteil 20 gezeigt, das ein Dichtungselement gemäß den Fig.1 bis 4 als eine Steuerscheibe 10 aufweist, die mit einer Grundscheibe 30 zusammenwirkt.

Das in den Fig.5 bis 7 dargestellte Ventiloberteil 20 besteht im wesentlichen aus zwei ineinandergefügten und gegeneinander drehbaren Hauptteilen, nämlich einem das Ventilgehäuse bildenden Kopfstück 22 und einer im Innenraum des Kopfstücks 22 vorzugsweise mit engen Toleranzen drehbar aufgenommenen Spindel 24. Das Kopfstück 22 weist in seinem unteren Bereich in diesem Fall zwei diametral angeordnete Fenster 26 auf, durch die das Wasser radial hindurchtreten kann.

Unterhalb dieser Fenster 26 bildet das Kopfstück 22 einen Zylinder mit einem entsprechenden Aufnahmeraum 28, in dem das Dichtungselement bzw. die Steuerscheibe 10 und die Grundscheibe 30 aufgenommen sind. Die Steuerscheibe 10 und die Grundscheibe 30 bestehen vorzugsweise aus Keramik.

Die Spindel 24 weist an ihrem oberen Ende eine zum Aufstecken eines Betätigungsorgans dienende Riefenverzahnung 38 sowie eine Kreisrille (nicht gezeigt) zur Verankerung einer Sicherungsscheibe oder Sicherungsklammer 40 für die in das Kopfstück 22 eingesetzte Spindel 24 auf. Zwei jeweils im oberen und unteren Bereich der Spindel 24 angeordnete Ringbünde 42 und 44 liegen an entsprechenden Innenflächen 46 bzw. 48 des Kopfstücks 22 berührungsfrei, aber mit engen Toleranzen an und sorgen u.a. für eine gute Drehführung der Spindel 24 im Kopfstück 22.

Oberhalb des Ringbundes 42 bzw. oberhalb des Ringbundes 44 ist je ein Dichtungs- und Radialführungsring 34 bzw. 36 in der Spindel 24 gelagert, die jeweils an der Innenwand des Kopfstücks 22 dichtend und führend anliegen. Zwischen den beiden Dichtungs- und Radialführungsringen 34 und 36 ist eine gegen das Eindringen des den unteren Teil des Kopfstückes 22 durchströmenden Wassers abgedichtete Fettkammer gebildet, in der zwei aus der Wandung des Kopfstücks 22 nach innen stehende und um entweder 90°, 180° oder 270° gegeneinander versetzter Anschläge (nicht gezeigt) sowie damit zusammenwirkende, an der Spindel 24 ausgebildete, parallel zur Radialrichtung versetzte Drehrichtungsbegrenzungsflächen (nicht dargestellt) angeordnet sind.

Auf den Außenumfang der Spindel 24 sind nahe dem oberen Dichtungs- und Radialführungsring 34 bzw. dem unteren Dichtungsund Radialführungsring 36 zur weiteren Verbesserung der Führung der Spindel 24 im Kopfstück 22 vorzugsweise aus Kunststoff bestehende Axiallagergleitscheiben (nicht gezeigt) aufgesteckt.

Aus der unteren Stirnseite der Spindel 24 ragen symmetrisch zu der Mittelachse 50 der Spindel 24 Mitnehmerzapfen 52 (in Fig.5 nur einer zu erkennen) heraus, die diametral zueinander angeordnet sind und in die Aussparungen 18 der Steuerscheibe 10 eingreifen, um diese Steuerscheibe 10 in gewünschter Richtung verschwenken zu können.

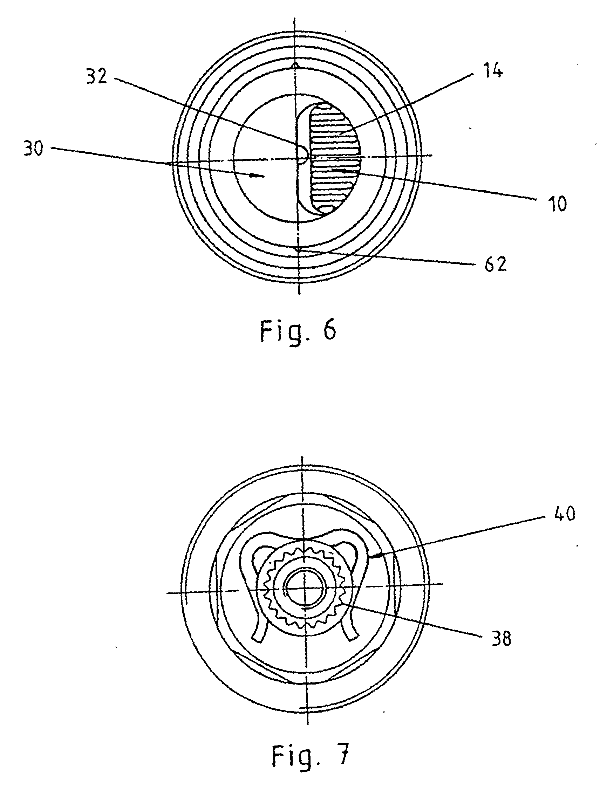

An der Unterseite dieser Steuerscheibe 10 liegt plan die vollständig im Aufnahmeraum 28 angeordnete Grundscheibe 30 an, die einen mit dem Öffnungsbereich 12 der Steuerscheibe 10 zusammenwirkenden Öffnungsbereich 32 zum Wasserdurchtritt aufweist. An diametral gegenüberliegenden Außenrandabschnitten stehen aus dem Umfang der Grundscheibe 30 Vorsprünge (nicht gezeigt) hervor, die an den Aussparungen 18 der Steuerscheibe 10 entsprechenden Positionen angeordnet sind und bei dem Einfügen der Grundscheibe 30 in den Aufnahmeraum 28 in gegenüberliegend angeordnete axiale Rillen 62 (vgl. Fig. 6) eingeführt werden, die an der Innenseite des Aufnahmeraums 28 vorgesehen sind. Dadurch kann die Grundscheibe 30 in zwei, in diesem gezeigten Beispiel um 180° gegeneinander versetzte Stellungen im Kopfstück 22 gegen Drehung festgelegt werden.

Zur Abdichtung gegen das Gehäuse einer Armatur, in die das Ventiloberteil 20 eingesetzt werden kann, wird unterhalb der Grundscheibe 30 ein aus dem unteren Ende leicht vorstehender Dichtungsring 54 in den Aufnahmeraum 28 eingefügt.

Ferner weist das Kopfstück 22 zu diesem Zweck noch üblicherweise ein Außengewinde 56 und einen in der Zeichnung oberhalb des Außengewindes 56 angeordneten äußeren Dichtungsring 58 auf.

Die zwischen den beiden Anschlagstellungen mögliche Drehung der Spindel 24, also beispielsweise von 90° bis 270°, vorzugsweise 90°, 180° oder 270° innerhalb des Kopfstückes 22 bewirkt, daß sich in der einen Anschlagstellung die Öffnungsbereiche 12 und 32 der Steuerscheibe 10 bzw. der Grundscheibe 30 voll überdecken, während sie in der anderen verdrehten Anschlagstellung keinerlei Überdeckung haben, so daß der Wasserdurchtritt gesperrt ist.

Setzt man nun die Vorsprünge der Grundscheibe 30 bei dem gezeigten Beispiel um 180° versetzt in den Aufnahmeraum 28 ein, so wird die vorige Sperrstellung des Ventiloberteils 20 durch Überdeckung der Öffnungsbereiche 12 und 32 zur Öffnungsstellung und die vorige Öffnungsstellung wird zur Schließstellung.

### Bezugszeichenliste

- 10: Dichtungselement / Scheibe
- 12: Öffnungsbereich
- 14: Stege
- 16: Durchmesser
- 18: Aussparungen
- 20: Ventiloberteil
- 22: Kopfstück
- 24: Spindel
- 26: Fenster
- 28: Aufnahmeraum
- 30: Grundscheibe
- 32: Öffnungsbereich (30)
- 34: Dichtungs- und Radialführungsring
- 36: dto.
- 38: Riefenverzahnung
- 40: Sicherungsscheibe/-klammer
- 42: Ringbund
- 44: Ringbund
- 46: Innenfläche
- 48: Innenfläche
- 50: Mittelachse
- 52: Mitnehmerzapfen
- 54: Dichtungsring
- 56: Außengewinde
- 58: äußerer Dichtungsring
- 60: Axiallagergleitscheibe
- 62: Axialrillen

## Patentansprüche

1. Als im Wesentlichen kreisrunde Keramikscheibe einstückig ausgebildetes Dichtungselement (10), das einen Öffnungsbereich (12) sowie Stege (14) zur Geräuschdämpfung im Öffnungsbereich (12) aufweist, **dadurch gekennzeichnet, dass** das Dichtungselement (10) durch eine Spindel (24) in einem Ventiloberteil (20) einer Sanitärarmatur wahlweise in eine Durchlass- und in eine Sperrposition verdrehbar ist, dass im Öffnungsbereich (12) eine Vielzahl von Stegen (14) senkrecht zu einem die Keramikscheibe halbierenden Durchmesser (16) sowie parallel zueinander verläuft, und dass die Stege (14) frei von scharfen Kanten oder Ecken sind.

2. Ventiloberteil (20) für Sanitärarmaturen, das ein gehäuseartiges Kopfstück (22) und eine in diesem zwischen zwei gegeneinander versetzten Anschlagstellungen drehbar angeordnete Spindel (24) aufweist, wobei das Kopfstück (22) in seinem unteren Bereich mindestens ein Fenster (26) zum radialen Wasseraustritt und einen Aufnahmeraum (28) für eine feststehenden Grundscheibe (30) sowie eine mit Hilfe der Spindel (24) verdrehbare Steuerscheibe (10) aufweist und wobei die Grundscheibe (30) und die Steuerscheibe (10) jeweils Öffnungsbereiche (32, 12) aufweisen, die in einer Anschlagstellung der Spindel (24) sich überdecken und in der anderen Anschlagstellung der Spindel (24) keine Überdeckung haben, **dadurch gekennzeichnet, dass** die Steuerscheibe (10) als Dichtungselement gemäß Anspruch 1 ausgebildet ist, und dass in der Innenwandung des Aufnahmeraums (28) zwei um 180° gegeneinander versetzte axiale Rillen (62) vorgesehen sind, dass die Grundscheibe (30) an zwei diametral gegenüberliegenden Stellen ihres Umfangs Vorsprünge aufweist, die wahlweise derart in die axialen Rillen (62) einsetzbar sind, dass der Öffnungsbereich (32) der Grundscheibe (30) an zwei unterschiedlichen Positionen angeordnet werden kann.

3. Ventiloberteil (20) nach Anspruch 2, **dadurch gekennzeichnet, dass** die Spindel (24) mit zwei diametral gegenüberliegenden Anschlägen im Kopfstück (22) zur Erzeugung der beiden Anschlagstellungen zusammenwirkende Drehrichtungsbegrenzungsflächen aufweist und oberhalb sowie unterhalb der Drehrichtungsbegrenzungsflächen je einen an der Innenseite des Kopfstücks (22) anliegenden Dichtungs- und Radialführungsring (34 bzw. 36) trägt, wobei die Dichtungs- und Radialführungsringe (34,36) unterschiedliche Durchmesser aufweisen.

4. Ventiloberteil (20) nach einem der vorstehenden Ansprüche 2 oder 3, **dadurch gekennzeichnet, dass** die Spindel (24) nahe den Dichtungs- und Radialführungsringen (34,36) je eine an der Innenseite des Kopfstücks (22) anliegende Axiallagergleitscheibe (60) trägt.

5. Ventiloberteil (20) nach einem der vorstehenden Ansprüche 2 bis 4, **dadurch gekennzeichnet, dass** aus dem unteren Ende der Spindel (24) zwei diametral angeordnete Mitnehmerzapfen vorgesehen sind, die in jeder Anschlagstellung der Spindel (24) mit ihren beiden radialen Enden zwischen je zwei Fenstern (26) des Kopfstücks (22) angeordnet sind und zum Verschwenken der Steuerscheibe (10) in deren Aussparungen (18) eingreifen.

6. Ventiloberteil (20) nach einem der vorstehenden Ansprüche 2 bis 5, **dadurch gekennzeichnet, dass** die Spindel (24) um 90° bis 270°, vorzugsweise 90°, 180° oder 270° verdrehbar ist.

## Claims

1. A sealing element (10) constructed in one piece as a substantially circular ceramic disk, which element (10) comprises an orifice area (12) together with webs (14) for silencing purposes in the orifice area (12), **characterised in that** the sealing element (10) may be rotated by a spindle (24) in a valve upper part (20) of a sanitary fitting as desired into a passage position and a blocked position, **in that** a plurality of webs (14) extends in the orifice area (12) perpendicularly to a diameter (16) bisecting the ceramic disk and parallel to one another, and **in that** the webs (14) are free of sharp edges or corners.

2. A valve upper part (20) for sanitary fittings, which comprises a housing-type head piece (22) and a spindle (24) arranged rotatably between two mutually offset stop positions, the head piece (22) comprising at least one window (26) in its lower area for radial water outlet and a receiving chamber (28) for a stationary base disk (30) together with a control disk (10) rotatable by means of the spindle (24), and the base disk (30) and the control disk (10) each comprising orifice areas (32, 12), which overlap in one stop position of the spindle (24) and do not overlap in the other stop position of the spindle (24), **characterised in that** the control disk (10) takes the form of a sealing element according to claim 1, and **in that** two axial grooves (62) offset by 180° relative to one another are provided in the inner wall of the receiving chamber (28), **in that** the base disk (30) comprises projections at two diametrically opposed points of its circumference, which projections may be inserted as desired in such a way into the axial grooves (62) that the orifice area (32) of the base disk (30) may be arranged at two different positions.

3. A valve upper part (20) according to claim 2, **characterised in that** the spindle (24) comprises direction of rotation defining faces interacting with two diametrically opposed stops in the head piece (22) to produce the two stop positions and above and below the direction of rotation defining faces bears in each case a sealing and radial guide ring (34 and 36 respectively) adjoining the inside of the head piece (22), the sealing and radial guide rings (34, 36) exhibiting different diameters.

4. A valve upper part (20) according to one of preceding claims 2 or 3, **characterised in that** the spindle (24) bears a thrust bearing sliding disk (60) adjacent the inside of the head piece (22) in the vicinity of each of the sealing and radial guide rings (34, 36).

5. A valve upper part (20) according to one of preceding claims 2 to 4, **characterised in that** two diametrically disposed driving pins are provided out of the lower end of the spindle (24), which pins are arranged in each stop position of the spindle (24) with their two radial ends between in each case two windows (26) of the head piece (22) and engage in the recesses (18) in the control disk (10) to swivel the latter.

6. A valve upper part (10) according to one of preceding claims 2 to 5, **characterised in that** the spindle (24) may be rotated by 90° to 270°, preferably 90°, 180° or 270°.

## Revendications

1. Elément d'étanchéité (10) réalisé en une seule pièce, sous la forme d'un disque de céramique sensiblement circulaire qui présente une région d'ouverture (12) ainsi que des barreaux (14) destinés à amortir le bruit dans la région d'ouverture (12), **caractérisé en ce que** l'élément d'étanchéité (10) peut être placé sélectivement par rotation dans une position de passage et dans une position de fermeture, par une broche (24) dans une partie supérieure de robinet (20) appartenant à un appareil de robinetterie sanitaire, avec dans la région d'ouverture (12), une pluralité de barreaux (14) s'étendant perpendiculairement à un diamètre (16) bissecteur du disque céramique ainsi que parallèlement entre eux, et les barreaux (14) sont exempts d'arêtes ou d'angles vifs.

2. Partie supérieure de robinet (20) pour appareils de robinetterie sanitaire, qui comprend une pièce de tête (22) en forme de boîtier et une broche (24) montée rotative dans cette pièce pour pouvoir tourner entre deux positions de butée décalées l'une par rapport à l'autre, la pièce de tête (22) présentant dans sa région inférieure, au moins une fenêtre (26) pour la sortie radiale de l'eau et une chambre de logement (28) pour un disque de base fixe (30). ainsi qu'un disque de commande (10) qui peut être déplacé en rotation au moyen de la broche (24), le disque de base (30) et le disque de commande (10) présentant respectivement des régions d'ouverture (32, 12) qui se recouvrent dans une position de butée de la broche (24), mais qui ne se recouvrent pas dans l'autre position de butée de la broche (24), **caractérisée en ce que**
le disque de commande (10) est constitué par un élément d'étanchéité selon la revendication 1 et, dans la paroi interne de la chambre de logement (28), deux rainures axiales (62) sont prévues décalées de 180° l'une par rapport à l'autre, et le disque de base (30) présente, en deux zones diamétralement opposées de sa circonférence, des protubérances qui peuvent être engagées sélectivement dans les rainures axiales (62), de sorte que la région d'ouverture (32) du disque de base (30) peut être disposée dans deux positions différentes.

3. Partie supérieure de robinet (20) selon la revendication 2,
**caractérisée en ce que**
la broche (24) présente des surfaces de limitation du sens de rotation coopérant dans la pièce de tête (22) avec deux butées diamétralement opposées pour la production des deux positions de butée et, au-dessus aussi bien qu'au-dessous des surfaces de limitation du sens de rotation, elle porte respectivement des bagues d'étanchéité et de guidage radial (34, respectivement 36) appuyées contre la surface interne de la pièce de tête (22), les bagues d'étanchéité et de guidage radial (34, 36) présentant des diamètres différents.

4. Partie supérieure de robinet (20) selon une des revendications précédentes 2 ou 3,
**caractérisée en ce que**
la broche (24) porte à proximité de chacune des bagues d'étanchéité et de guidage radial (34, 36) à chaque fois une rondelle de glissement de palier axial (60) appuyée contre la surface interne de la pièce de tête (22).

5. Partie supérieure de robinet (20) selon une des revendications précédentes 2 à 4,
**caractérisés en ce qu'**
en dehors de l'extrémité inférieure de la broche (24) sont prévus deux ergots d'entraînement disposés diamétralement qui, dans chaque position de butée de la broche (24), sont disposés avec leur deux surfaces radiales entre deux fenêtres (26) de la pièce de tête (22) et qui, pour faire tourner le disque de commande (10), sont engagés dans des évidements (18) de ce disque.

6. Partie supérieure de robinet (20) selon une des revendications précédentes 2 à 5,
**caractérisée en ce que**
la broche (24) peut tourner d'un angle de 90 ° à 270 °, de préférence d'un angle égal à 90 °, 180 ° ou 270 °.
